# EUROPEAN PATENT APPLICATION

(11) **EP 1 120 597 A1**
(43) Date of publication of application: **01.08.2001**
(21) Application number: 00310086.4
(22) Date of filing: 13.11.2000
(51) Int. Cl.: F16M 11/06

(54) **Device for adjusting and fixing the angular position of an element mounted pivotable on a support**

(30) Priority: 24.01.2000 EP 00460007
(71) Applicant: TRT Lucent Technologies (SA), 75008 Paris (FR)
(72) Inventor: Delanoe, Jacques, 76000 Rouen (FR)
(74) Representative: Buckley, Christopher Simon Thirsk

(57) **Abstract**

This device for adjusting and fixing the angular position of an element (1) such as a radio antenna housing mounted pivotable on a support (2) comprises firstly two circular rings (15, 25) fixed to the said element (1) and the said support (2) respectively, the two rings being designed to be superposed concentrically on each other, as the articulation part between the said element and the said support, and having each a peripheral inner surface with relief, and secondly a cylindrical shaped connecting part (3) that will fit inside the two rings (15, 25) to fix them together, the said connecting part firstly being provided with an outer surface (32) with corresponding relief that will face the relief in the rings (15, 25), and secondly provided with means of increasing its diameter within the rings (15, 25).

## Description

This invention relates to a means of adjusting and fixing the angular position of an element mounted pivotable on a support.

The invention was designed for the purpose of fixing cordless telephone radio antennas on the subscriber's premises, and this is the context in which it will be presented in this description, although it could be used for much wider applications.

At the present time, these subscriber radio antennas are integrated into a rectangular flat-bottomed housing placed on a two-part metallic support assembly enabling adjustment of the antenna rotation in azimuth. More precisely, the support assembly includes a plate on which the flat bottom of the housing is fixed, installed to pivot on a base plate and lockable in an angular position chosen by means of a screw passing through a slit in the shape of an arc of a circle at a certain distance from the hinge.

Apart from its disadvantages, namely the relatively large number of its parts, the fact that it is not always easy to install it depending on installation conditions, this solution is becoming more and more inappropriate due to developments being made to subscriber antenna housings. Firstly, it is planned to significantly increase the antenna power in the future, and consequently its dimensions and the dimensions of the housing in which it is contained, which would make a modified metallic support assembly expensive. Furthermore, particularly due to aesthetic reasons, the housing will no longer have a flat bottom, and therefore there will be problems in attaching it on its support plate which must be designed to resist very strong winds up to 200 km/h.

Therefore, the invention starts from a search for a replacement solution for the metallic support assembly described above, for fixing an antenna housing with the possibility of adjusting its orientation in azimuth, that would be more suitable considering the disadvantages and requirements mentioned above, and which could also satisfy the following additional objectives:
- avoid the use of metal as the basic material for the antenna housing attachment device;
- avoid the combination of metal and plastic, since it is known that the plastic can split under some temperature conditions, due to the stresses induced by the metallic elements caused by the differences in the coefficients of expansion;
- provide a fine adjustment range of the antenna orientation in azimuth equal to 180°;
- provide an attachment that retains all its strength and resistance capabilities within a wide temperature range (-33° to +55°);

Consequently, the invention comprises a device for adjusting and fixing the angular position of an element mounted pivotable on a support, characterized in that the device between the said element and the said support comprises firstly two circular rings fixed to the said element and to the said support respectively, designed so that one is superposed concentrically on the other, as the articulation part between the said element and the said support, and each being provided with relief on the peripheral inner surface, and secondly a cylindrical shaped connecting part designed to engage into the two rings to bring them together, the connecting part firstly having relief on its external surface complementary to the said relief on the surfaces of the said rings, to be placed facing the said relief, and secondly comprises means of uniformly increasing the outside diameter of the connecting part inside the rings, such that it can be inserted in the rings leaving them free to rotate with respect to each other, and then expanded so as to press the said surfaces with relief facing each other into contact with each other in order to secure their position with respect to each other and thus rotatively fix the two rings with respect to each other.

In a preferred embodiment of the invention, the said surfaces with relief are grooved parallel to the hinge pin, defining a regular toothing with a triangular profile.

According to another characteristic of the invention, the said cylindrical connecting part is formed of a tube with longitudinal slits uniformly distributed around its periphery and open alternately at one end and then the opposite end, its inner wall being frusto-conical, and the means of expanding it is a complementary shaped frusto-conical core in which the tip is extended by a threaded rod designed to project beyond the internally narrowed end of the said tube so that a control nut can be fitted on it.

The characteristics and advantages of the invention mentioned above, and others, will become clearer after reading the following description and the drawings in which:
- Figure 1 is a perspective view of the mounted assembly of a telephone subscriber antenna housing with its attachment device according to the invention;
- Figure 2 is an exploded perspective view of the same assembly; and
- Figure 3 is an exploded perspective view of a connecting part in the attachment device according to the invention shown in Figures 1 and 2.

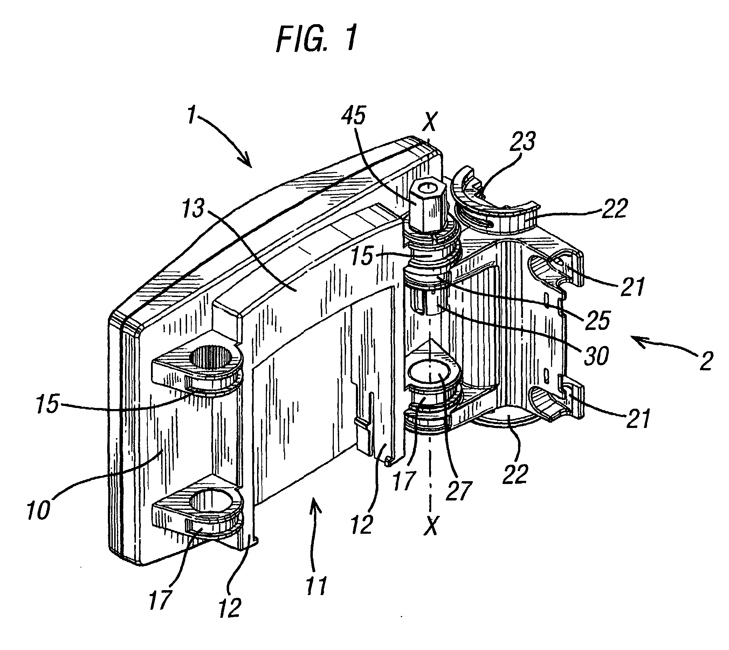

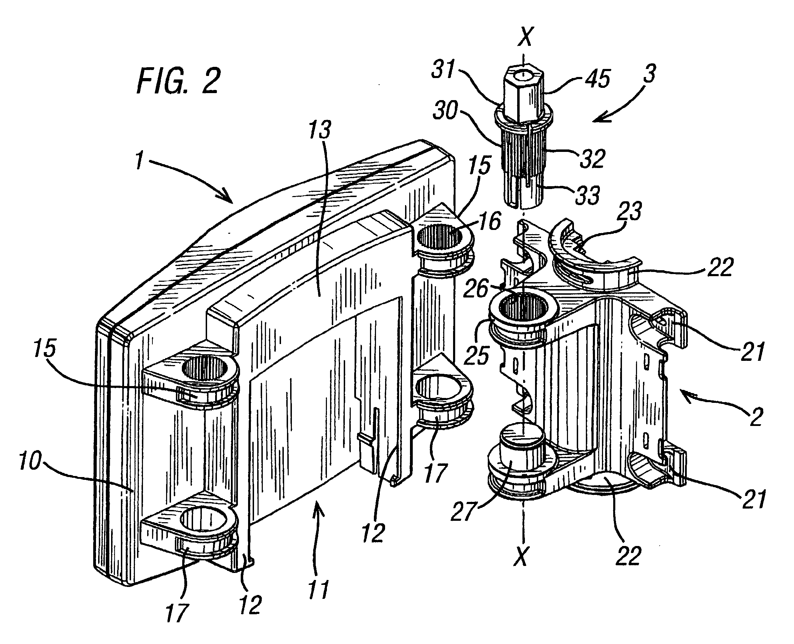

Therefore, the Figures 1 and 2 comprise an antenna housing 1 in which the antenna is integrated around the periphery. The central part of the housing 1, although most of what can be seen is the back 10, also comprises a slide type housing 11 delimited by two lateral edges 12 and an upper edge 13, and designed to contain a removable module not shown, which may contain the radio card associated with the antenna or a connection interface and optional accessories if the user wishes, and in this case the radio card is located elsewhere away from the antenna.

As shown in the drawings, housing 1 was designed with a real concern for aesthetics, and moreover it is relatively large due to the size of the antenna which depends on its power, that is likely to be increased up to 12 dBi in future equipment generations. As a guide, a housing about 25 cm wide and 20 cm high would be necessary in this case.

The invention is related particularly to this housing, and therefore taking special account of the aesthetics, cost, atmospheric constraints (winds up to 200 km/h, temperature conditions and variations within the -35°C to +55°C range, sunshine) and fatigue strength.

An "all-plastic" solution was adopted without any metal despite the number of these requirements, also providing the advantage that it is completely neutral to components which would otherwise have to be protected by shielding; for example, a small accessory antenna intended for a remote communication function at a short distance between the fixed installation and the subscriber portable.

The orientation adjustment and fixing device according to the invention comprises a base plate 2 which conventionally comprises means of selectively installing it on a wall, by screwing it in its four corners 21, or on a mast using top and bottom tightening collars 22 at the mid-points, preferably provided with the latching teeth 23 inside, providing an effective system for rotative fixing.

The assembly means for housing 1 on plate 2 comprise an upper circular ring 25 and a lower pivot 27 in the form of a cylindrical pin oriented upwards centered on the same vertical axis X-X, as integral parts of the plate 2 projecting from the plate.

The housing 1 comprises means complementary to ring 25 and pivot 27, that consist of an upper ring 15 and a lower ring 17, laid out on one side beyond the adjacent side edge 12 of the median housing 11. The rings 15 and 17 form an integral part of the back 10 and project from it. They are arranged with respect to each other such that when the lower ring 17 is engaged on the pivot 27, the upper ring 15 is superposed above the ring 25.

The inside diameters of the upper rings 15 and 25 are the same, and the relief on the inner peripheral wall of both of these rings is the same, in this case a grooved surface formed of a continuous sequence of small grooves around the entire periphery 16 and 26 respectively, arranged vertically, in other words parallel to the common axis of the two rings 15 and 25 and open at both ends, defining a triangular toothing, in a saw tooth configuration.

The articulation composed of rings 15, 17, 25 and pivot 27 is completed by a connecting part 3 joining the upper rings 15 and 25.

The function of the connecting part 3 is to form a pivot common to rings 15 and 25 allowing them to rotate with respect to each other to adjust the azimuth position of the antenna, and another function is to efficiently lock rings 15 and 25 together to hold housing 1 in the chosen position.

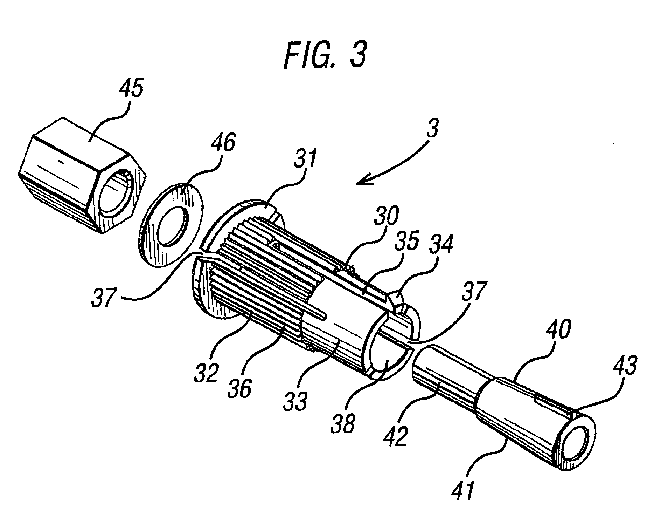

Consequently, the connecting part 3 that is more clearly visible in Figure 3, comprises a first generally tubular-shaped element 30 designed to fit intimately into rings 15 and 25 superposed on each other. Element 30 comprises an upper stop collar 31 and relief is formed around the entire periphery of an upper part of its outer surface 32 complementary to the relief on the inner peripheral surface of the rings, in this case a series of longitudinal grooves 36 with the same profile as grooves 16 and 26. The toothing formed by grooves 36 forming the grooved surface 32 projects above the smooth surface of the lower part 33 which is slightly higher than ring 25, whereas the height of the upper part 32 is approximately the same as the superposition height of rings 15 and 25.

A projection 34 formed at the end of an elastic tab 35 cutout in the wall of element 30 and on the opposite side of collar 31, locks element 30 positively as soon as it is inserted crosswise in the two rings 15 and 25.

According to the invention, element 30 can be extended uniformly in diameter and for this purpose it is provided in its wall with a plurality of longitudinal slits 37 uniformly distributed around its periphery and open alternatively at the lower end and then at the upper end, in this case including at the collar 31. The length of the slits 37 is more than half of the height of element 30, and is advantageously of the order of two thirds of this height.

The connecting part 3 also comprises means of uniformly expanding the element 30 in the radial direction, in this case consisting firstly of the frusto-conical inner side wall 38 in element 30 itself, getting narrow from the bottom towards the top near collar 31; and secondly an element 40 comprising a lower body or core 41 in the form of a truncated cone complementary to the taper in the said inner wall 38 of element 30, extended at its top end by a threaded shank 42 on which a tightening nut 45 will be fitted. The element 40 is inserted in element 30 such that the threaded shank projects beyond the upper end on which nut 45 will be fitted, the nut bearing on collar 31 through a washer 46. The core 41 is rotationally blocked inside element 30 by a longitudinal rib 43 designed to fit into one of the slits 37.

Housing 1 is positioned on its support plate 2, by inserting the complete connecting part 3 with the nut 45 just threaded on the end of the threaded shank 42, through the top into rings 15 and 25 put into position so that they can be locked by projection 34 under ring 25. At this stage the grooved upper part 32 of element 30 is engaged only in ring 15, ring 25 being occupied by the smooth lower surface 33, such that the housing 1 can be pivoted until it is oriented with the correct azimuth. The element 30 is then pushed all the way into rings 15 and 25, in order to provide preliminary blocking in rotation, through the grooved upper surface 32 which now passes through both of them. The nut 45 is then turned to bring core 41 upwards into element 30 until the appropriate tightening is obtained. Note that in the tightening position, the core 41 of element 40 fills most of the volume of the element 30 inside the two rings 15 and 25.

In practice, the number of teeth around the periphery of rings 15, 25 and element 30 may be of the order of 40, therefore corresponding to an azimuth rotation adjustment step of about 9°. It can also be seen on the drawings that the adjustment range is 90°, and that it can be doubled simply by providing a pair of rings 15 and 17 on each side of the back of the housing 10.

## Claims

1. Device for adjusting and fixing the angular position of an element (1) mounted free to pivot on a support (2), characterized in that it comprises as the articulation part between the said element (1) and the said support (2) consisting firstly of two circular rings (115, 25) fixed to the said element (1) and to the said support (2) respectively, designed so that one is superposed concentrically on the other, and each being provided with relief on the peripheral inner surface, and secondly a cylindrical shaped connecting part (3) designed to engage into the two rings (15, 25) to bring them together, the connecting part firstly having relief on its outer surface (32) complementary to the said relief on the surfaces of the said rings (15, 25), to be placed facing the said surfaces, and secondly comprises means of uniformly increasing its outside diameter part inside the rings (15, 25), such that it can be inserted in the rings (15, 25) leaving them free to rotate with respect to each other, and then expanded so as to press the said surfaces with relief facing each other into contact with each other in order to secure their position with respect to each other and thus rotatively fix the two rings (15, 25) with respect to each other.

2. Device according to claim 1, characterized in that the said surfaces with relief (16, 26, 36) are grooved surfaces parallel to the hinge pin, defining a regular toothing with a triangular profile.

3. Device according to claim 2, characterized in that the said toothing on the grooved surfaces define an angular rotational pitch of the order of 9°.

4. Device according to one of claims 1 to 3, characterized in that the said articulation between the element (1) and the support (2) comprises a pair of rings (15, 17) on one side of the element (1), centered on the same axis (X-X) with which the said articulation can rotate through a range of about 90°, the said rotation range being doubled by the fact that the housing (1) has a second pair of rings (15, 17) symmetrically on its other side.

5. Device according to one of claims 1 to 4, characterized in that the said cylindrical connecting part (3) is formed of a tube (30) with longitudinal slits (37) uniformly distributed around its periphery and open alternately at one end and then the opposite end, its inner wall (38) being frusto-conical, and the means of expanding it is a complementary shaped frusto-conical core (41) in which the tip is extended by a threaded rod (42) designed to project beyond the internally narrowed end of the said tube (30) so that a control nut (45) can be fitted on it.

6. Device according to claim 5, characterized in that the said tube (30) comprises an end collar (31) on which the said nut (45) bears, and is provided with a grooved surface (32) externally towards the bottom starting from the said collar (31) over a height approximately equal to the height over which the said rings (15, 25) are superposed, followed by a smooth surface (33) over a height equal to at least the height of the ring (25).

7. Device according to claim 6, characterized in that the said tube (30) comprises a locking projection (34) opposite the collar (31).

8. Device according to one of claims 1 to 7, characterized in that the element (1) is an antenna housing and the support (2) is its attachment plate onto a mast or a wall.
